# EUROPEAN PATENT APPLICATION

(11) **EP 1 699 250 A1**
(43) Date of publication of application: **06.09.2006**
(21) Application number: 04807639.2
(22) Date of filing: 16.12.2004
(51) Int. Cl.: H04Q 7/34

(54) **ROAMING SYSTEM, MOBILE COMMUNICATION SYSTEM, AND MOBILE COMMUNICATION CONTROL METHOD**

(30) Priority: 22.12.2003 JP 2003424630; 30.01.2004 JP 2004023384
(71) Applicant: Kabushiki Kaisha Kenwood, Hachiouji-shi, Tokyo 192-8525 (JP)
(72) Inventor: MATSUHASHI, Keiichi, Yokohama-shi, Kanagawa 2450013 (JP)
(74) Representative: Leinweber & Zimmermann
(86) International application number: PCT/JP2004/019282
(87) International publication number: WO 2005/062645

(57) **Abstract**

There is provided a system for judging validity of a radio terminal according to identification information on the radio terminal and providing a service. A radio network is divided into a plurality of zones. For each of the zones, there is arranged a server for storing in a particular zone, the position of the directory containing identification information on each radio terminal without storing identification information on the radio terminal registered in other zone. By communication between the server and zone controllers, the identification information on the radio terminal is confirmed and a service is provided. Thus, it is possible to realizing a roaming system capable of performing an ideal roaming without increasing the volume of the system resource.

## Description

### Technical Field

The present invention relates to data communication in a wireless network, and more specifically to a roaming system, a mobile communication system, and a mobile communication control method.

### Background Art

A wireless network includes a plurality of sites, each corresponding to a zone extending to a radius of several kilometers to tens of kilometers around a base station. The base station at each site accepts transmission to and reception from wireless terminals existing at the site at the point in time. Performing data communication between the base stations at these sites realizes what is called a wide area network.

Each wireless terminal is registered with its home site. The zone in which a wireless terminal is usually placed is the wireless terminal's home site. To wireless terminals having a certain zone as their home site, a server residing at the corresponding base station provides services available at the site.

In order to use such a service, a user of a wireless terminal must prove that the user is authorized to use the service, or prove the user's authenticity by "authentication." Therefore, the wireless terminal's identification information may be registered in advance and used for the proving. The identification information is maintained and centrally managed by the server of the home site.

When a wireless terminal moves into a zone that is not its home site, the wireless terminal cannot receive services from the home site. This would compromise the usefulness of the wireless terminal, so that the same services as in the home site are made available in zones other than the home site.

When a wireless terminal moves into a zone (visitor site) that is not its home site, the server of the visitor site does not have the incoming wireless terminal's identification information stored thereon. Therefore, the server searches for the wireless terminal's home site and queries the server of that home site. If the wireless terminal turns out to be an authenticated receiver of a service as a result of the query, the service is provided to the wireless terminal. This series of processing is generally called roaming.

Japanese Patent No. 2970603 discloses an inter-network roaming control method about roaming.

In order to make it possible to locate the home site in performing the above-described roaming, each site may have a data table by which the home site can be derived from the identification information. However, each site must maintain as much extra data as the number of sites, which is data irrelevant to the terminals whose home site is that site. This would increase the number of processes for the developer, as well as the volume of system resource and the total cost.

Alternatively, information indicating the home site may be incorporated into the identification information. In this approach, the numbering plan itself for the identification information needs to be designed so that the site information can be incorporated. Furthermore, a portion of the identification information must be spent for the site information. This poses problems, for example, that portions assigned to the wireless terminal is reduced, and that it is difficult to accommodate an increase in the number of users.

Moreover, if each site in the network includes a plurality of controllers, the process to know which controller manages the identification information is complicated. Then, it is expected that the response characteristic from each site is degraded and the users cannot receive sufficient services.

The present invention has been made in view of the above problems in the current situation and conventional art. It is the objective of the present invention to provide a roaming system, a mobile communication system, and a mobile communication control method that involve less increase in system resource and in the procedure complexity.

### Disclosure of the Invention

To achieve the above objective of the present invention, a roaming system according to a first aspect of the present invention comprises: one or more controllers provided for each of zones that constitute a wireless network; and a server communicatively connected to the controllers in the zones. Each controller comprises storage means that stores identification information given to wireless terminals for receiving a service, the wireless terminals being registered with the zone in which the controller resides, and each controller operates to detect the identification information on a wireless terminal from the storage means when a request for the service is received from the wireless terminal, and to provide the service to the wireless terminal if the identification information is detected or to issue a query for checking outside for the presence of the identification information if the identification information is not detected. The server maintains information indicating which controller in which zone stores the identification information on the wireless terminals, and the server operates to, on receiving the query, detect a controller that stores the identification information on the wireless terminal for which the identification information is not detected, to communicate with the detected controller to confirm the presence of the identification information on the wireless terminal which the identification information is not detected, and to allow the controller that has issued the query to provide the service to the confirmed wireless terminal.

The server may be integrated with one of the controllers.

The server preferably operates to prohibit provision of the service to the confirmed wireless terminal if the query is received from a controller in a particular zone.

A mobile communication system according to a second aspect of the present invention allows access to a single directory information tree from a plurality of directory servers corresponding to a plurality of sites in a mobile communication network, and comprises a plurality of authentication controllers provided in the respective sites for authenticating mobile communication terminals that request a service at each site. Each of the plurality of authentication controllers comprises: search request generation means that acquires identification information on a mobile communication terminal and generates a search request directed to the directory server when a request for a service is received from the mobile communication terminal; search request transmission means that transmits the search request generated by the search request generation means to the directory server in the corresponding sites; and authentication processing means that determines whether or not to permit provision of the service to the mobile communication terminal based on a search result acquired from the directory server. Each directory server comprises: storage means that stores identification information given to mobile communication terminals for receiving a service, the mobile communication terminals being registered with the site corresponding to the directory server; identification information detection means that detects, from the storage means, the identification information on a mobile communication terminal specified in the search request from the authentication controller or in the search request redirected from a directory server corresponding to another site; search request redirection means that redirects the search request from the authentication controller to a directory server located above or below in the directory information tree among the directory servers corresponding to other sites when the identification information on the mobile communication terminal is not detected by the identification information detection means; and search result provision means that provides a search result indicating success in detection of the identification information to the authentication controller when the identification information on the mobile communication terminal is detected in the other directory server to which the search request has been redirected by the search request redirection means, or in the identification information detection means.

The authentication processing means operates to determine to permit provision of the service to the mobile communication terminal when the search result indicating success in detection of the identification information on the mobile communication terminal is acquired from the directory server.

Preferably, each directory server comprises reference information storage means that stores address information on another directory server located above or below in the directory information tree, and the search request redirection means refers to the address information stored in the reference information storage means and redirects the search request to the other directory server located above or below in the directory information tree.

A mobile communication system according to a third aspect of the present invention allows access to a single directory information tree having a hierarchical tree structure from a plurality of server apparatus. Each server apparatus comprises: entry management means that stores entries in a directory provided in a subtree in the directory information tree, an attribute value of each entry being identification information given to any one of the mobile communication terminals which are able to provide a service in a mobile communication network; identification information detection means that detects the identification information on a mobile communication terminal among the attribute values of the entries stored in the directory by the entry management means; search request transmission means that transmits a predetermined search request to another server apparatus located above or below in the directory information tree when the identification information on the mobile communication terminal is not detected by the identification information detection means; and service provision control means that allows provision of the service to the mobile communication terminal when the identification information on the mobile communication terminal is detected in the other server apparatus to which the search request has been transmitted by the search request transmission means or in the identification information detection means, and that prohibits provision of the service to the mobile communication terminal when no other server apparatus is located above or below in the directory information tree or when the identification information on the mobile communication terminal is not detected in the other server apparatus to which the search request has been transmitted by the search request transmission means.

Preferably, each server apparatus comprises reference information storage means that stores address information on another server apparatus located above or below in the directory information tree, and the search request transmission means refers to the address information stored in the reference information storage means and transmits the search request to the other server apparatus located above or below in the directory information tree.

A mobile communication control method according to a fourth aspect of the present invention allows access to a single directory information tree from a plurality of server apparatus. Each server apparatus performs a sequence of processing steps comprising:
- a search request transmission step for transmitting a predetermined search request to another server apparatus located above or below in the directory information tree when identification information on one of the mobile communication terminals that are able to provide a service in a mobile communication network is not detected;
- a service provision permission step for allowing provision of the service to the mobile communication terminal when the identification information on the mobile communication terminal is detected in the other server apparatus to which the search request has been transmitted at the search request transmission step or detected at the identification information detection step; and
- a service provision prohibition step for prohibiting provision of the service to the mobile communication terminal when no other server apparatus is located above or below in the directory information tree at the search request transmission step or when the identification information on the mobile communication terminal is not detected in the other server apparatus to which the search request has been transmitted at the search request transmission step.

In a still another aspect, the present invention may be implemented as a computer program for performing signal processing in the mobile communication control method comprising the above sequence of steps. In this case, the computer program performs a sequence of processing steps comprising:
- an entry management step for storing entries in a directory provided in a subtree in the directory information tree, an attribute value of each entry being identification information given to any one of the mobile communication terminals which are able to provide a service in the mobile communication networks;
- an identification information detection step for detecting the identification information of a mobile communication terminal among the attribute values of the entries stored in the directory at the entry management step;
- a search request transmission step for transmitting a predetermined search request to another server apparatus located above or below in the directory information tree when the identification information on the mobile communication terminal is not detected in the identification information detection step;
- a service provision permission step for allowing provision of the service to the mobile communication terminal when the identification information on the mobile communication terminal is detected in the other server apparatus to which the search request has been transmitted at the search request transmission step or detected at the identification information detection step; and
- a service provision prohibition step for prohibiting provision of the service to the mobile communication terminal when no other server apparatus is located above or below in the directory information tree at the search request transmission step or when the identification information on the mobile communication terminal is not detected at the other server apparatus to which the search request has been transmitted at the search request transmission step.

### Brief Description of the Drawings

Figure 1 is a connection diagram of a roaming system according to a first embodiment;
Figure 2 is a block diagram showing a controller;
Figure 3 is a block diagram showing a server;
Figure 4 is a diagram describing a roaming method;
Figure 5 is a flowchart showing a roaming procedure;
Figure 6 is a connection diagram of a mobile communication system according to a second embodiment;
Figure 7 is a diagram showing an exemplary logical configuration of an authentication server;
Figure 8 is a diagram showing an exemplary logical configuration of a directory server;
Figure 9 is a diagram showing an exemplary configuration of a data communication network that uses a plurality of directory servers;
Figure 10 is a diagram showing an exemplary configuration of a single directory tree accessible from the directory servers;
Figure 11 is a flowchart showing an authentication processing;
Figure 12 is a flowchart showing a search processing;
Figure 13 is a diagram for describing an example of specific operations in the exemplary configuration shown in Figure 9; and
Figure 14 is a diagram for describing an example of specific processing in the exemplary configuration shown in Figure 10.

### Best Mode for Carrying Out the Invention

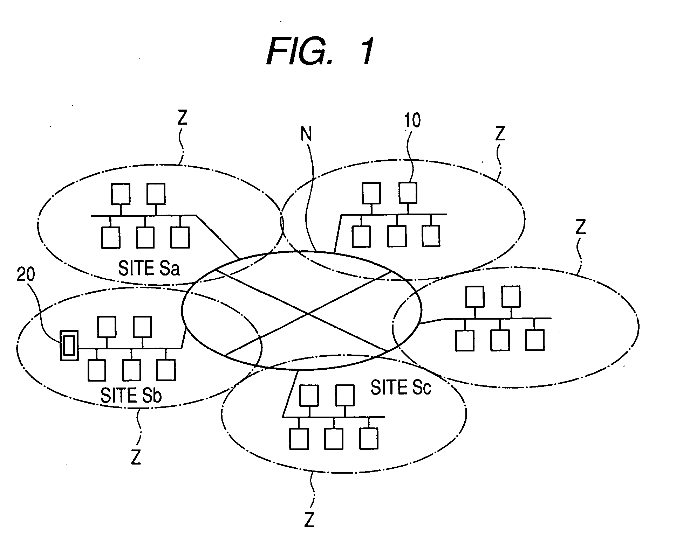

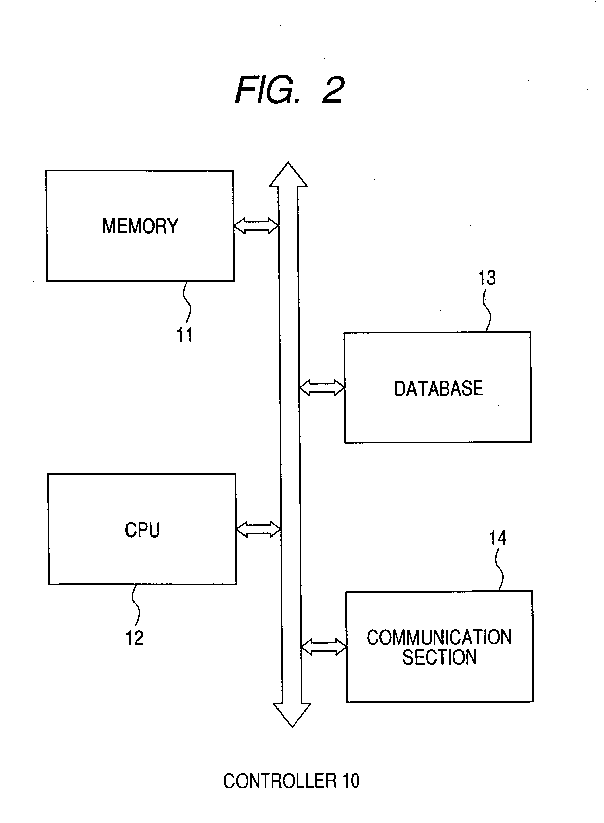

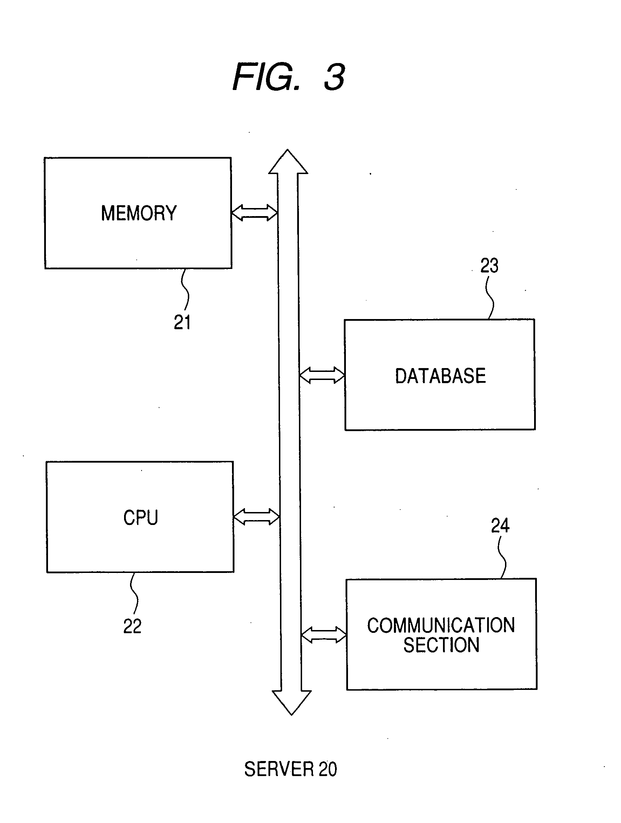

Figure 1 is a connection diagram of a roaming system according to a first embodiment of the present invention. Figure 2 is a block diagram showing a controller. Figure 3 is a diagram showing an exemplary configuration of a server 20.

A wireless network includes a plurality of sites, each corresponding to a zone Z extending to a radius of several kilometers to tens of kilometers around a base station. Each base station is provided with an arbitrary number of controllers 10. These controllers 10 are interconnected over a network N.

The controllers 10 of the base stations accept transmission to and reception from wireless terminals existing at the corresponding site at the point in time. Performing data communication between the controllers 10 of these sites realizes what is called a wide area network.

Each wireless terminal is registered with its home site. The zone in which a wireless terminal is usually placed is the wireless terminal's home site. The controllers 10 at the corresponding base station provide services.

The roaming system in this embodiment consists of the controllers 10 residing at the sites Sa, Sb, Sc..., and a server 20 residing at, for example, the site Sb.

A controller 10 includes a memory 11 for storing programs and other data, a CPU 12, a database 13, and a communication section 14, which are all interconnected.

The database 13 stores information as a tree-structure, such as identification information on wireless terminals previously registered with the zone where the controller 10 resides and other information. The communication section 14 is communicatively connected to the server 20 over the network N. The communication section 14 may also wirelessly communicate with the wireless terminals.

The server 20 includes a memory 21 for storing programs and other data, a CPU 22, a database 23, and a communication section 24, which are all interconnected.

The communication section 24 is communicatively connected to the controllers 10 over the network N. The communication between the communication section 24 and the controllers 10 is performed in accordance with a protocol, for example TCP/IP.

The database 23 stores a directory tree about various types of information whose entries are data memory spaces of the controllers 10 at its own site and other sites. At each site, in turn, various types of data are stored so that the data memory spaces of the controllers 10 within the site have a tree-like hierarchy. That is, the tree-structured directories of various types of information including the identification information on the wireless terminals are stored so that the directories can be complemented between the database 23 of the server 20 and the database 13 of each controller 10. Thus, distributed directories are constructed that conform to the LDAP (Lightweight Directory Access Protocol) protocol or an equivalent protocol. The server 20 can detect the location of a directory storing certain information. At the site Sb where the server 20 resides, the controller 10 and the server 20 may be integrated.

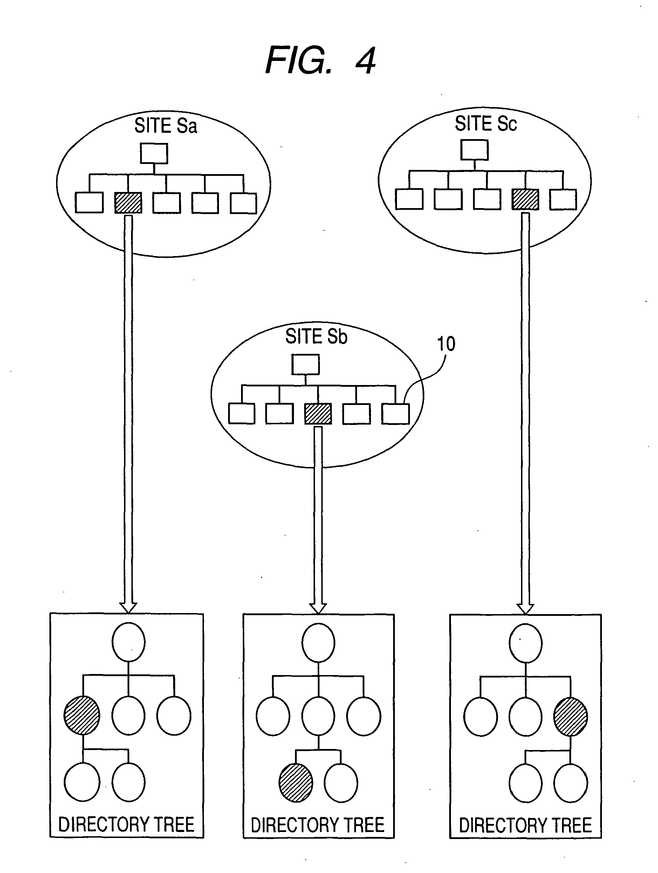

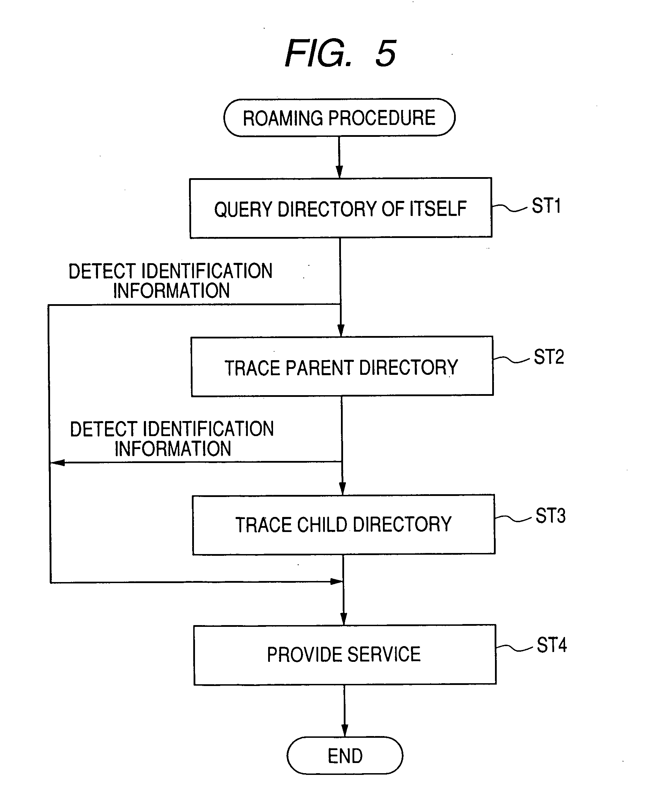

Now, the operation of the roaming system that consists of the controllers 10 and the server 20 will be described with reference to Figures 4 and 5.

Figure 4 is a diagram describing a roaming method. Figure 5 is a flowchart showing a roaming procedure.

When a request for a service is made by a wireless terminal, a controller 10 acquires the request through the communication section 14. The CPU 12 searches the identification information in the database 13, which is given to registered wireless terminals for providing the service. That is, the CPU 12 performs query of its own directory in Figure 5 (step ST1).

The CPU 12 performs the processing at step ST1 irrespective of whether the wireless terminal is registered with the zone where the controller 10 resides or with other zones.

If the wireless terminal is registered with the zone where the controller 10 resides, the database 13 contains its identification information. Therefore, the identification information can be detected. The ability to detect the identification information authenticates the wireless terminal that is requesting the service. The controller 10 provides the service to the requesting wireless terminal (step ST4).

For example, if a wireless terminal registered with the site Sc requests a service at the site Sa, the wireless terminal's identification information is not detected at the site Sa.

On failure of detecting the identification information, the CPU 12 traces the parent directory at step ST2. That is, the CPU 12 issues a query through the communication section 14 about whether or not the identification information on the wireless terminal requesting the service is stored in a controller 10 other than its own controller 10.

The issued query is input to the server 20 through the communication section 24 of the server 20. The CPU 22 traces the directory using the database 23 and detects that the identification information on the wireless terminal being queried for is stored in the database 13 at the site Sc. If, as in Figure 4, a plurality of controllers 10 reside at the site Sc and each stores and manages different information, the CPU 22 detects the controller 10 storing the identification information and finds the directory containing that particular identification information.

If the wireless terminal being queried for is registered with the site Sb, the CPU 22 of the server 20 communicates with a controller 10 at the site Sb and detects the identification information on the wireless terminal being queried for among the identification information stored at the site Sb. In this case, the server 20 informs the controller 10 that has issued the query of the discovery of the identification information, and allows the controller 10 to provide the service to the wireless terminal requesting the service (step ST4).

In the processing at step ST2, the CPU 22 of the server 20 finds that the identification information on the wireless terminal registered with the site Sc is stored in a controller 10 at the site Sc. In this case, the server 20 communicates with that controller 10 at the site Sc over the network N at step ST3. The server 20 finds that the identification information on the wireless terminal being queried for is stored in the database 13 of that controller 10. This authenticates the wireless terminal requesting the service. The server 20 informs the controller 10 that has issued the query of the authenticity and allows the controller 10 to provide the service to the wireless terminal requesting the service.

In this manner, the roaming system according to the first embodiment of the present invention allows a wireless terminal to receive a service even after moving to a site other than the site with which the wireless terminal is registered.

Furthermore, the roaming system in this embodiment provides the following operational effects.
(1) No extra system resource are required because each site has no identification information on the wireless terminals registered with other sites.
(2) The portion assigned to the wireless terminals is not reduced because the identification information requires no site indication data. In addition, an increase in the number of the sites will not cause exhaustion of the identification numbers.
(3) Each site or each controller 10 does not need to set a new roaming procedure.

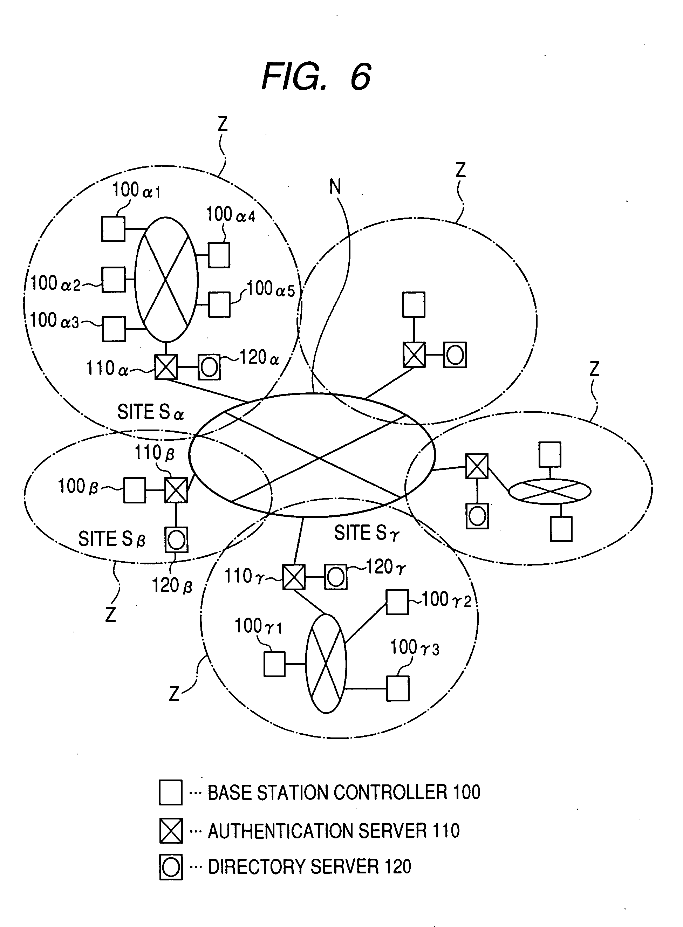

Figure 6 is a connection diagram of a mobile communication system according to a second embodiment of the present invention. The mobile communication system shown in Figure 5 includes a plurality of sites, each corresponding to a zone Z extending at a radius of several kilometers to tens of kilometers around one or more base stations, each base station being geographically distant from each other. Each site is provided with an arbitrary number of (one or more) base stations, each having a base station controller 100 corresponding to each site. Each of the sites is also provided with corresponding authentication servers 110 and directory servers 120.

In the exemplary arrangement shown in Figure 6, as an example, the site S_{α} includes five base stations, and therefore includes five base station controllers 100_{α1} to 100_{α5} for the respective base stations, an authentication server 110_{α}, and a directory server 120_{α}. The site S_{β} includes one base station, and therefore includes one base station controller 100_{β} for the base station, an authentication server 110_{β}, and a directory server 120_{β}. The site S_{γ} includes three base stations, and therefore includes three base station controller 100_{γ1} to 100_{γ3} for the respective base stations, an authentication server 110_{γ}, and a directory server 120_{γ}.

A mobile communication terminal capable of providing a user with services in the mobile communication system shown in Figure 6 has any one of the sites including the sites S_{α} to S_{γ} as its home site. Various types of information such as the identification information are registered with the home site.

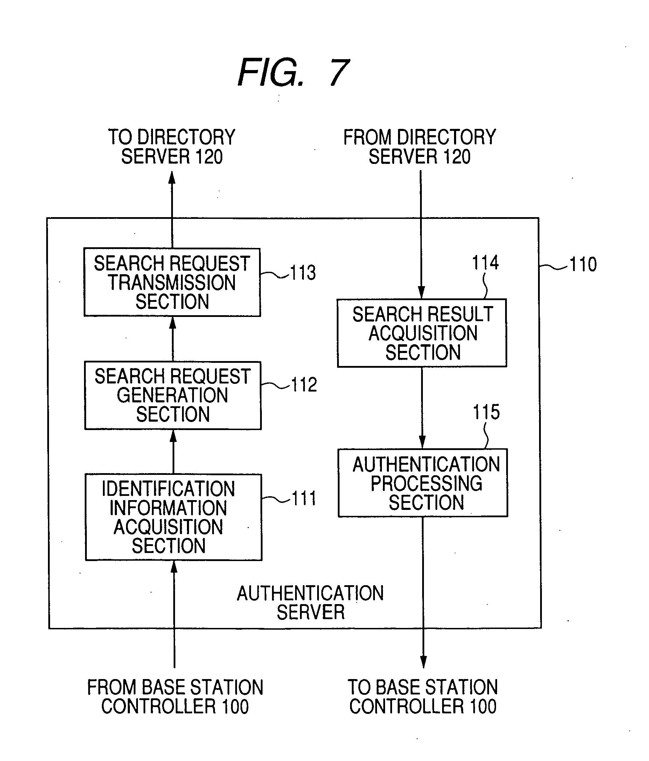

The authentication server 110 and the directory server 120 may each be a workstation that includes a ROM (Read Only Memory), a RAM (Random Access Memory), a CPU, a HDD (Hard Disk Drive), a communication interface, and so on. The authentication server 110 is responsible for authenticating a mobile communication terminal that requests a service. The authentication server 110 has a logical configuration as shown in Figure 7 that is implemented by, for example, the CPU executing a program that is read from the HDD. As shown in Figure 7, the authentication server 110 includes an identification information acquisition section 111, a search request generation section 112, a search request transmission section 113, a search result acquisition section 114, and an authentication processing section 115.

The identification information acquisition section 111 is responsible for acquiring, from a mobile communication terminal requesting the service at the site where the authentication server 110 resides, the mobile communication terminal's identification information. The search request generation section 112 is responsible for generating a search request addressed to a directory server 120 based on the mobile communication terminal's identification information acquired by the identification information acquisition section 111. For example, the search request generation section 112 generates a search request in a format that conforms to a predetermined protocol, such as the LDAP protocol or an equivalent protocol.

The search request transmission section 113 is responsible for transmitting the search request generated by the search request generation section 112 to a directory server 120 corresponding to the authentication server 110. For example, the search request transmission section 113 transmits the search request to the directory server 120 residing at the same site as the authentication server 110. As a specific example, in the exemplary arrangement shown in Figure 6, the search request transmission section 113 of the authentication server 110_{α} at the site S_{α} transmits the search request to the directory server 120_{α}. The search request transmission section 113 of the authentication server 110_{β} at the site S_{β} transmits the search request to the directory server 120_{β}. The search request transmission section 113 of the authentication server 110_{γ} at the site S_{γ} transmits the search request to the directory server 120_{γ}.

The search result acquisition section 114 is responsible for acquiring a result of a search performed in the directory server 120 in response to the search request. The authentication processing section 115 is responsible for performing authentication for determining, based on the search result acquired by the search result acquisition section 114, whether or not to permit the provision of the service to the mobile communication terminal requesting the service.

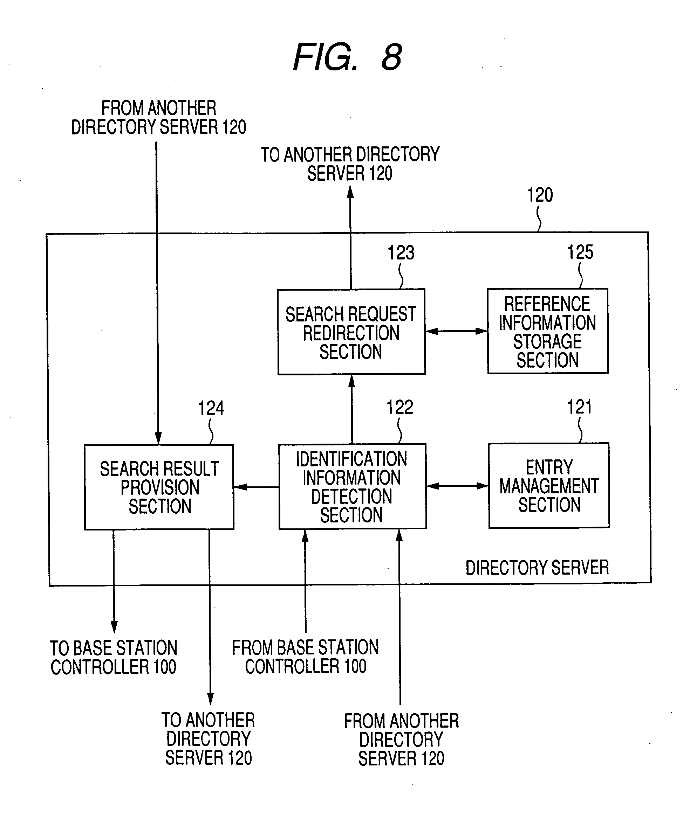

The directory server 120 is responsible for storing and managing various types of information, such as the identification information given to any of a plurality of mobile communication terminals to which the service can be provided in the mobile communication system. The directory server 120 has a logical configuration as shown in Figure 8 that is implemented by, for example, the CPU executing a program that is read from the HDD. As shown in Figure 8, the directory server 120 includes an entry management section 121, an identification information detection section 122, a search request redirection section 123, a search result provision section 124, and a reference information storage section 125.

The entry management section 121 is responsible for managing entries by storing them in a directory that forms a predetermined hierarchical tree structure. The attribute values of the entries are the identification information assigned to mobile communication terminals whose home site is the site where the directory server 120 resides. The identification information detection section 122 is responsible for performing a predetermined search in response to the search request from the authentication server 110. It then detects the identification information on a mobile communication terminal specified in the search request among the attribute values of the entries stored in the directory by the entry management section 121. Similarly, the identification information detection section 122 performs the same search in response to a search request redirected from another directory server 120, and detects the identification information on the mobile communication terminal specified in the search request.

The search request redirection section 123 is responsible for redirecting the search request received from the authentication server 110 to another directory server 120 when the identification information on the mobile communication terminal specified in the search request is not detected as a result of the search performed by the identification information detection section 122. The search result provision section 124 is responsible for providing a search result to the authentication server 110 and the like as a result of performing a search by the identification information detection section 122. The search result indicates whether or not the identification information on the mobile communication terminal is detected. If the search request redirection section 123 has redirected the search request to another directory server 120, the search result provision section 124 may acquire the search result from the other directory server 120 to which the search request has been redirected and may provide the search result to the authentication server 110 and the like. Furthermore, if the identification information detection section 122 has performed a search in response to a search request redirected from another directory server 120, the search result provision section 124 may provide a search result acquired by the identification information detection section 122 to the other directory server 120 from which the search request has been redirected.

The reference information storage section 125 is responsible for storing information about other directory servers 120 to which the search request redirection section 123 may redirect a search request and other directory servers 120 to which the search result provision section 124 may provide a search result.

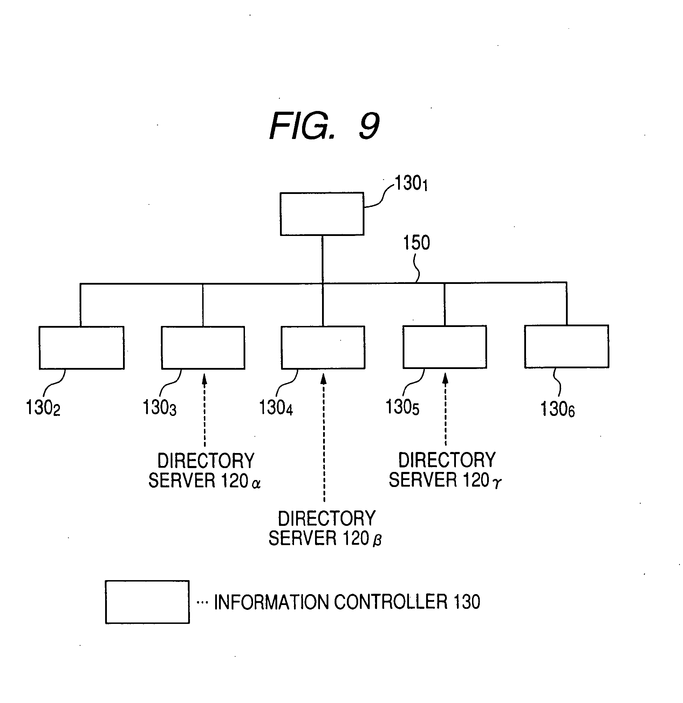

In this embodiment, the directory servers 120 provided for the respective sites are interconnected over a data communication network, such as a wide area LAN (Local Area Network), WAN (Wide Area Network), or VPN (Virtual Private Network). Each directory server 120 operates as any one of the information controllers 130 interconnected through, for example, a data communication line 150 as shown in Figure 9. In the exemplary configuration shown in Figure 9, as an example, six information controllers 130₁ to 130₆ are connected through the data communication line 150 and are capable of data communication with each other in accordance with a predetermined protocol, for example TCP/IP.

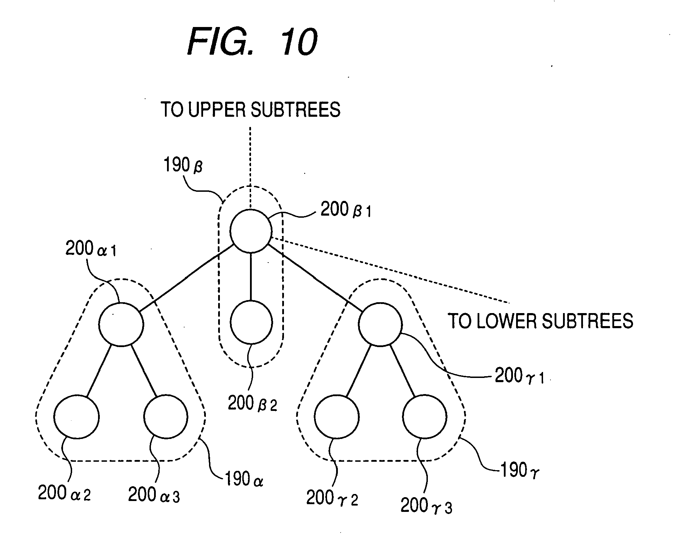

With regard to the information controllers 130₁ to 130₆ shown in Figure 9, the entries managed by the entry management section 121 of the directory servers 120 form a hierarchical tree structure. All entries maintained by the information controllers 130₁ to 130₆ form a single logical (virtual) directory information tree (DIT), as shown in Figure 10 for example. That is, each of the information controllers 130₁ to 130₆ has memory spaces corresponding to the entries stored in the subtree (partial tree) managed by that controller, and all entries in the information controllers 130₁ to 130₆ are accessibly managed as a single logical directory information tree.

In the exemplary configuration shown in Figure 9, as an example, the information controller 130₃ is the directory server 120_{α} at the site S_{α}, the information controller 130₄ is the directory server 120_{β} at the site S_{β}, and the information controller 130₅ is the directory server 120_{γ} at the site S_{γ}.

In this embodiment, the entry management section 121 of the directory server 120_{α} operating as the information controller 130₃ manages a subtree 190_{α} by providing predetermined distinguished names (DN) or relative distinguished names (RDN) to three entries 200_{α1} to 200_{α3} shown in Figure 10 and by storing the entries in a predetermined entry information file. The entry management section 121 of the directory server 120_{β} operating as the information controller 130₄ manages a subtree 190_{β} by providing predetermined DNs to two entries 200_{β1} and 200_{β2} shown in Figure 10 and by storing the entries in a predetermined entry information file. The entry management section 121 of the directory server 120_{γ} operating as the information controller 130₅ manages a subtree 190_{γ} by providing predetermined DNs to three entries 200_{γ1} to 200_{γ3} shown in Figure 10 and by storing the entries in a predetermined entry information file.

In order to allow access to the entire directory information tree as shown in Figure 10 from each of the information controllers 130₁ to 130₆ as shown in Figure 9, the reference information storage section 125 of each directory server 120 stores information about other directory servers 120 located above or below in the directory information tree.

For example, the reference information storage section 125 of the directory server 120_{α} operating as the information controller 130₃ stores address information (e.g., the host URL (Uniform Resource Locator) address of LDAP) on the directory server 120_{β} managing the subtree 190_{β}, which is above the subtree 190_{α} managed by the directory server 120_{α} and shown in Figure 10. The reference information storage section 125 of the directory server 120_{β} operating as the information controller 130₄ stores address information on the directory servers 120_{β} and 120_{γ} managing the subtrees 190_{α} and 190_{γ} respectively, which are below the subtree 190_{β} managed by the directory server 120_{β}. The reference information storage section 125 of the directory server 120_{γ} operating as the information controller 130₅ stores address information on the directory server 120_{β} managing the subtree 190_{β}, which is above the subtree 190_{γ} managed by the directory server 120_{γ}. In addition, for the directory information tree formed as shown in Figure 10, for example, the reference information storage section 125 of the directory server 120_{β} operating as the information controller 130₄ may also store the address information on other directory servers 120 that manage other subtrees located below or above the subtree 190_{β} managed by the directory server 120_{β}.

Now, operations of the mobile communication system having the above-described configuration will be described.

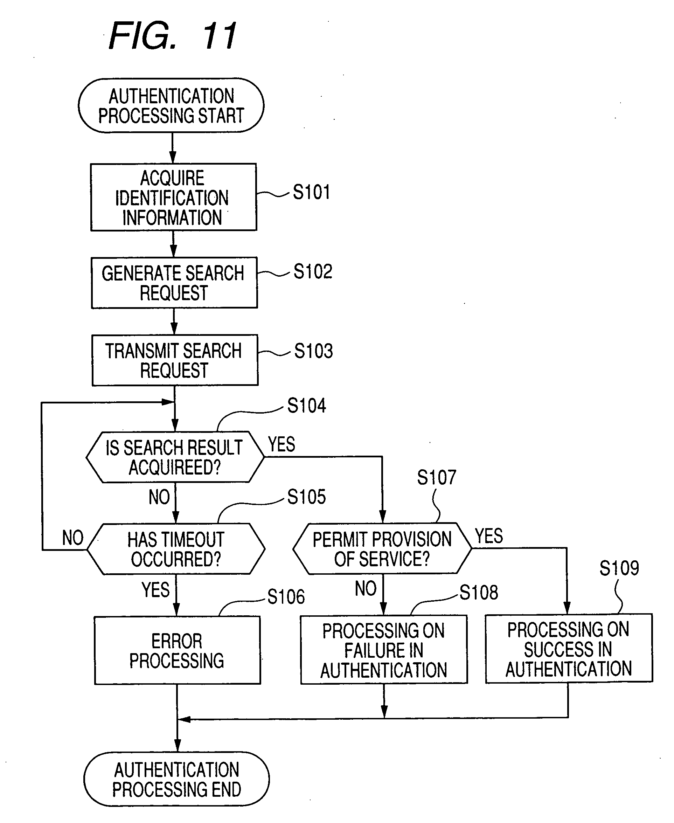

When a request for a service is made by a mobile communication terminal, a base station controller 100 acquires the mobile communication terminal's identification information and transmits the identification information to an authentication server 110. The authentication server 110 authenticates the mobile communication terminal requesting the service by performing an authentication processing shown in a flowchart of Figure 11.

In the authentication processing shown in Figure 11, the authentication server 110 acquires the mobile communication terminal's identification information from the base station controller 100 through the identification information acquisition section 111 (step S101). Based on the identification information, the authentication server 110 generates a search request addressed to a directory server 120 through the search request generation section 112 (step S102). The search request generated by the search request generation section 112 is transmitted to a corresponding directory server 120 through the search request transmission section 113 (step S103). For example, the search request transmission section 113 transmits the search request generated by the search request generation section 112 to the directory server 120 residing at the same site.

Thereafter, the authentication server 110 determines whether or not a search result is acquired from the directory server 120 through the search result acquisition section 114 (step S104). If a search result is not acquired (step S104; No), a determination is made whether or not a predetermined waiting period has passed to cause a timeout (step S105). If a timeout has occurred at step S105 (step S105; Yes), a predetermined error processing is performed, such as transmitting an error message to the authentication server 110 (step S106). If a timeout has not occurred at step S105 (step S105; No), the flow returns to step S104 to wait until a search result is acquired.

If a search result is acquired from the directory server 120 at step S104 (step S104; Yes), the authentication processing section 115 determines, based on the search result, whether or not to permit the provision of the service to the mobile communication terminal requesting the service (step S107). Here, if the search result acquired by the search result acquisition section 114 from the directory server 120 indicates the failure in detecting an entry whose attribute value is the mobile communication terminal's identification information, the authentication processing section 115 determines that the provision of the service to the user of the mobile communication terminal is not permitted (step S107; No). The authentication processing section 115 performs a predetermined processing on the failure in authentication (step S108). For example, a message is transmitted to the base station controller 100 informing that the provision of the service to the mobile communication terminal is prohibited.

If the search result acquired by the search result acquisition section 114 indicates the success in detecting an entry whose attribute value is the mobile communication terminal's identification information, the authentication processing section 115 determines that the provision of the service to the user of the mobile communication terminal is permitted (step S107; Yes). The authentication processing section 115 performs a predetermined processing on the success in authentication (step S109). For example, a message is transmitted to the base station controller 100 informing that the provision of the service to the mobile communication terminal is permitted. The predetermined processing on the success in authentication may also include: a processing for determining services available to the mobile communication terminal based on the search result acquired by the search result acquisition section 114 from the directory server 120 and informing the base station controller 100 to make a certain service available; and processing for registering, based on information such as the location of the base station controller 100 that has received the service request from the mobile communication terminal, the location of the mobile communication terminal for which the service is made available.

In this manner, the authentication server 110 can authenticate the mobile communication terminal requesting the service based on the search result about the mobile communication terminal's identification information acquired from the directory server 120.

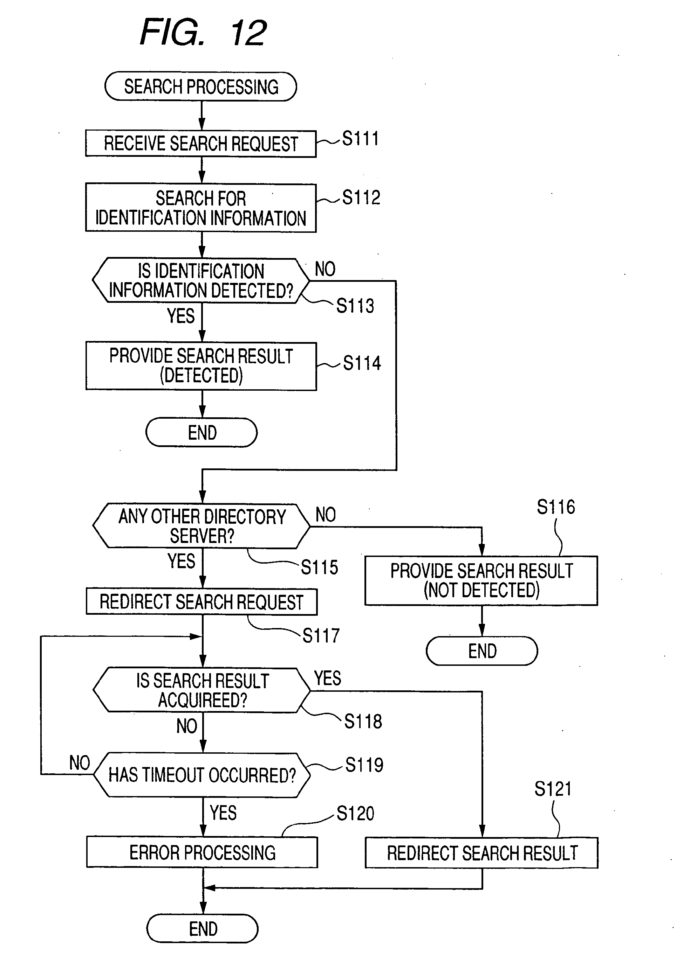

The directory server 120 provides the search result for the search request transmitted from the authentication server 110 by performing a search processing as shown in a flowchart of Figure 12.

In the search processing shown in Figure 12, the directory server 120 receives a search request from the authentication server 110 or from another directory server 120 that has redirected the search request (step S111). In response to the search request, the identification information detection section 122 performs a predetermined search processing. That is, the attribute values of entries stored in the directory by the entry management section 121 are searched for the identification information on a mobile communication terminal specified in the search request (step S112). If the identification information on the mobile communication terminal specified in the search request is detected as a result of the search by the identification information detection section 122 (step S113; Yes), the search result provision section 124 performs a processing for providing a search result indicating the success in detecting the mobile communication terminal's identification information (DETECTED) (step S114). For example, the search result provision section 124 may use, as the search result, the identification name of the entry whose attribute value is the identification information on the mobile communication terminal specified in the search request. Then, the search result may be returned to the authentication server 110 or the other directory server 120 from which the search request has been received at the above step S111.

If the identification information on the mobile communication terminal specified in the search request is not detected as a result of the search by the identification information detection section 122 (step S113; No), a processing for redirecting the search request received at the above step S111 to another directory server 120 is performed. That is, the search request redirection section 123 refers to the information, such as addresses, stored in the reference information storage section 125 and determines whether or not any other directory server 120 is located above or below in the directory information tree (step S115).

If any other appropriate directory server 120 is not found above or below in the directory information tree (step S115; No), it is determined that the searched entries do not include an entry whose attribute value is the identification information specified in the search request. The search result provision section 124 performs a processing for providing a search result indicating the failure in detecting the mobile communication terminal's identification information (NOT DETECTED) (step S116). For example, the search result provision section 124 provides a search result indicating the failure in detecting the mobile communication terminal's identification information to the authentication server 110 from which the search request has been received at the above step S111 or to the other directory server 120 that has redirected the search request at step S111.

If any other appropriate directory server 120 is found above or below in the directory information tree (step S115; Yes), the search request redirection section 123 redirects the search request to the other directory server 120 determined based on the information, such as addresses, stored in the reference information storage section 125 (step S117).

Thereafter, the directory server 120 determines whether or not a search result is acquired from the other directory server 120 to which the search request has been redirected at step S117 (step S118). If a search result is not acquired (step S118; No), a determination is made whether or not a predetermined waiting period has passed to cause a timeout (step S119). If it is determined that a timeout has occurred (step S119; Yes), a predetermined error processing is performed (step S120). For example, an error message is transmitted to the authentication server 110 from which the search request has been received at the above step S111 or to the other directory server 120 that has redirected the search request at step S111. Alternatively, if it is determined that a timeout has occurred at step S119, it may be determined that the identification information on the mobile communication terminal specified in the search request cannot be detected. The flow may then proceed to the above step S116 to return a search result indicating the failure in detecting the identification information.

If a timeout has not occurred at step S119 (step S119; No), the flow returns to step S118 to wait until a search result is acquired. If it is determined that a search result is acquired from the other directory server 120 to which the search request has been redirected at step S117 (step S118; Yes), a redirect processing is performed. That is, the search result provision section 124 provides the search result to the authentication server 110 from which the search request has been received at the above step S111 or to the other directory server 120 that has redirected the search request at step S111 (step S121).

In this manner, the directory server 120 can search for an entry whose attribute value is the identification information on the mobile communication terminal specified in the search request transmitted from the authentication server 110, and provide the search result.

Now, as a specific example, a description will be given of operations performed when a mobile communication terminal having the site S_{γ} as its home site requests a service at the site S_{α}.

The authentication server 110_{α} acquires the mobile communication terminal's identification information from any one of the base station controllers 100_{α1} to 100_{α5} at the site S_{α} and generates a search request through the search request generation section 112 (step S102 in Figure 11). The search request generated by the authentication server 110_{α} is transmitted to the directory server 120_{α} which is located at the site S_{α} corresponding to the authentication server 110_{α} through the search request transmission section 113 (step S103).

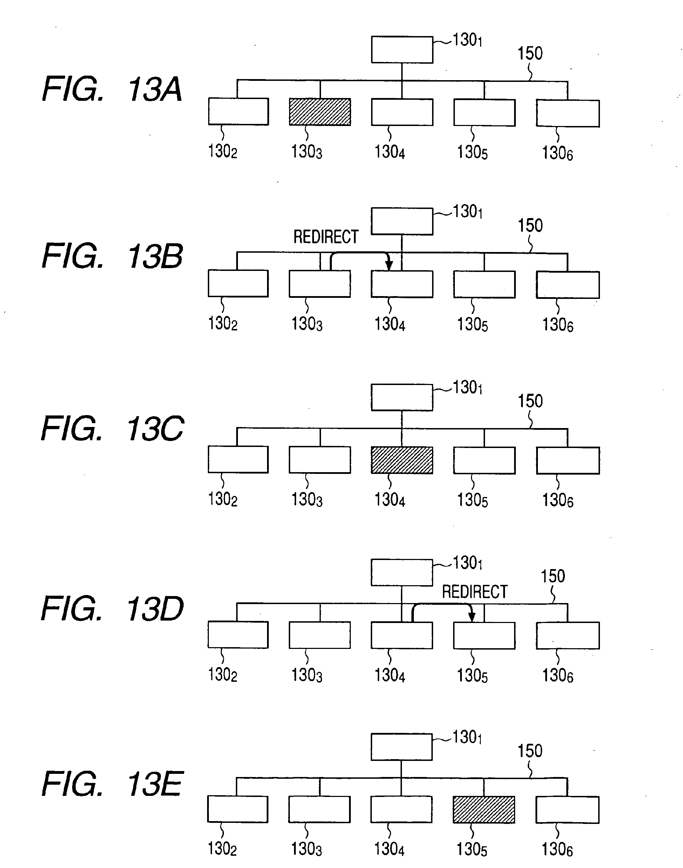

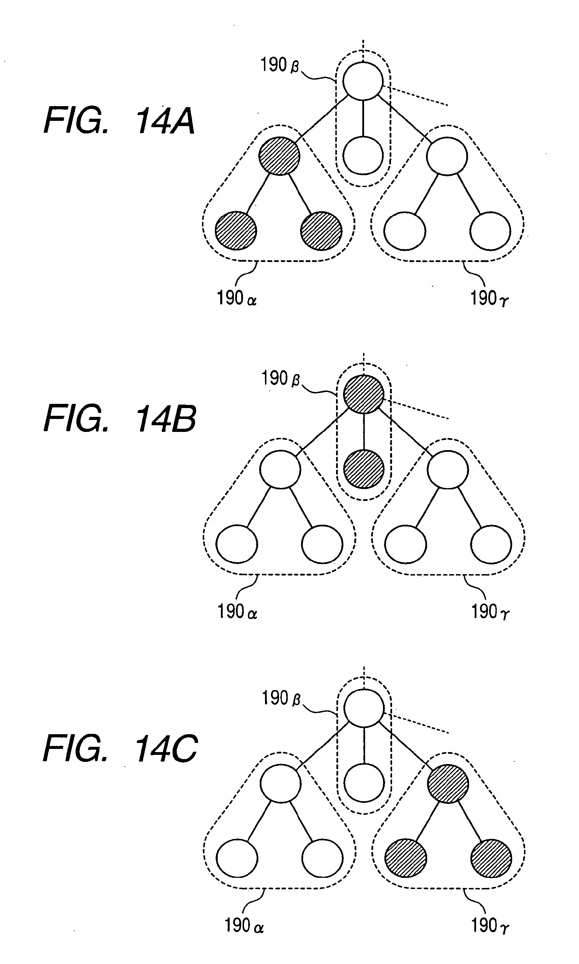

The directory server 120_{α} receives the search request from the authentication server 110_{α} (step S111 in Figure 12) and operates as the information controller 130₃ indicated by hatching in Figure 13(A) to search the entries it manages. That is, the identification information detection section 122 of the directory server 120_{α} reads the attribute values of the entries 200_{α1} to 200_{α3} (indicated by hatching in Figure 14(A)) in the subtree 190_{α} managed by the entry management section 121. It then determines whether or not the identification information on the mobile communication terminal specified in the search request can be detected (step S113). In this case, the mobile communication terminal requesting the service has the site S_{γ} as its home site. Therefore, an entry whose attribute value is the identification information specified in the search request cannot be detected among the entries of the subtree 190_{α} managed by the directory server 120_{α} residing at the site S_{α} (step S113; No).

The search request redirection section 123 of the directory server 120_{α} refers to the information, such as addresses, stored in the reference information storage section 125. It thereby identifies the directory server 120_{β} at the site S_{β}, which is the information controller 130₄ managing the subtree 190_{β} above the subtree 190_{α}. As shown by an arrow in Figure 13(B), the search request redirection section 123 redirects the search request received from the authentication server 110_{α} to the directory server 120_{β} operating as the information controller 130₄ (step S117 in Figure 12).

The directory server 120_{β} receives the search request through the data communication line 150 from the directory server 120_{α} residing as the information controller 130₃ at the site S_{α} (step S111 in Figure 12). The directory server 120_{β} operates as the information controller 130₄ indicated by hatching in Figure 13(C) and searches the entries it manages. That is, the identification information detection section 122 of the directory server 120_{β} reads the attribute values of entries 200_{β1} and 200_{β2} (indicated by hatching in Figure 14(B)) in the subtree 190_{β} managed by the entry management section 121. It then determines whether or not the identification information on the mobile communication terminal specified in the search request can be detected (step S113).

If an entry whose attribute value is the identification information specified in the search request cannot be detected among the entries of the subtree 190_{β} managed by the directory server 120_{β} at the site S_{β} (step S113; No), the search request redirection section 123 of the directory server 120_{β} identifies the directory server 120_{γ} at the site S_{γ}, which is the information controller 130₅ managing the subtree 190_{γ} below the subtree 190_{β}. It is noted that the reference information storage section 125 of the directory server 120_{γ} also stores the address information on the directory server 120_{α}, which operates as the information controller 130₃ managing the subtree 190_{α} below the subtree 190_{β}. However, since the directory server 120_{α} has redirected the search request to the directory server 120_{β}, the search request redirection section 123 of the directory server 120_{β} excludes the directory server 120_{α} from appropriate redirection targets of the search request.

Thereafter, as shown by an arrow in Figure 13(D), the search request redirection section 123 of the directory server 120_{β} redirects the search request transmitted from the authentication server 110_{α} to the directory server 120_{γ} operating as the information controller 130₅ (step S117 in Figure 12).

The directory server 120_{γ} receives the search request through the data communication line 150 from the directory server 120_{β} residing as the information controller 130₄ at the site S_{β} (step S111 in Figure 12). The directory server 120_{γ} operates as the information controller 130₅ indicated by hatching in Figure 13(E) and searches the entries it manages. That is, the identification information detection section 122 of the directory server 120_{γ} reads the attribute values of the entries 200_{γ1} to 200_{γ3} (indicated by hatching in Figure 14(C)) in the subtree 190_{γ} managed by the entry management section 121. It then determines whether or not the identification information on the mobile communication terminal specified in the search request can be detected (step S113 in Figure 12).

If an entry whose attribute value is the identification information on the mobile communication terminal specified in the search request is detected in the directory server 120_{γ} (step S113; Yes), a search result indicating the success in detecting the identification information is returned to the directory server 120_{α} through the directory server 120_{β} (steps S114 and S121). The search request provision section 124 of the directory server 120_{α} provides the search result, which has been returned from the directory server 120_{γ} through the directory server 120_{β}, to the authentication server 110_{α}.

The authentication server 110_{α} receives the search result indicating that the mobile communication terminal's identification information is detected among the entries managed by the directory server 120_{γ}. The authentication processing section 115 determines that the provision of the service to the mobile communication terminal is permitted (step S107; Yes) and performs a predetermined processing on the success in authentication (step S109). Thus, the provision of the service to the mobile communication terminal is enabled.

The directory server 120_{β} at the site S_{β} may have a replica of the subtree 190_{γ} managed by the directory server 120_{γ}. In that case, the identification information detection section 122 of the directory server 120_{β} may search the replica. It may thereby detect an entry whose attribute value is the identification information on the mobile communication terminal specified in the search request transmitted from the authentication server 110_{α}. Then, the directory server 120_{β} may return the search result indicating the success in detecting the identification information to the directory server 120_{α} without redirecting the search request to the directory server 120_{γ}.

In this manner, the mobile communication system according to the second embodiment of the present invention allows a mobile communication terminal to receive a service even if the terminal moves to visitor sites other than the home site with which the terminal is registered. For example, in the exemplary configuration shown in Figure 6, even if the mobile communication provider managing the site S_{α} is different from the one managing the site S_{γ}, the identification information on mobile communication terminals can be managed without redundancy. This achieves sharing of information and allows authentication of users of the mobile communication terminals in a simple manner.

Thus, the mobile communication system in this embodiment does not require each site to have the identification information on mobile communication terminals registered with other sites. Therefore, an increase in system resource can be prevented. The mobile communication terminals, in turn, do not need to manage information indicating with which site they are registered. Therefore, an extension of the identification information assigned to the mobile communication terminals can be avoided. In addition, an increase in the number of sites will not cause a deadlock in the identification number assignment plan.

Each directory server 120 only needs to have information about other directory servers 120 above or below itself in the directory information tree and need not to know the entire network structure. Accordingly, if a directory server 120 is added, for example, what is required is only that the information, such as addresses, stored in the reference information storage section 125 is added/modified between the additional server and the servers above and below the subtree managed by the additional server. Therefore, an increase in system resource and in the procedure complexity may be prevented.

The entry management section 121 of the directory server 120 can readily control access for each entry (or directory) according to the content of requests received from outside. This facilitates setting, such as prohibition of roaming from a particular site. Besides the identification information on the mobile communication terminals, the attribute value of the entries may be information on access control. This allows detailed setting of the content of services available to each mobile communication terminal. In addition, connecting the data communication line 150 shown in Figure 9 to a public network such as the Internet may facilitate reference to or modification of information, such as the identification information on the mobile communication terminals, by various terminals connected to the public network. On the contrary, disconnecting the data communication line 150 shown in Figure 9 from a public network may enhance confidentiality (security) of information, such as the identification information on the mobile communication terminals.

Besides the above-described embodiments, the present invention allows many variations. For example, the server 20 in the first embodiment may prohibit the provision of a service to an authenticated wireless terminal if it receives a query from a controller 10 in a particular zone.

The above second embodiment has been described such that the authentication server 110 and the directory server 120 are separate from each other. However, the present invention is not limited to it, but they may be implemented as a single computer system. In that case, for example, a single computer system may execute an authentication process for implementing the configuration of the authentication server 110 as shown in Figure 7, and a directory management process for implementing the configuration of the directory server 120 as shown in Figure 8. The single computer system may thereby have the functionality of the authentication server 110 and the directory server 120 in the above second embodiment. Alternatively, the base station controller 100 for each base station in the above second embodiment may have the functionality of the authentication server 110. The base station controller 100 may then directly access the directory server 120 and transmit the search request for the identification information acquired from a mobile communication terminal.

The above second embodiment has been described such that, if an entry whose attribute value is the identification information on the mobile communication terminal specified in the search request is not found in the subtree managed by the directory server 120, the directory server 120 redirects the search request to another directory server 120, which further performs a search. However, the present invention is not limited to it. Rather, if an entry is not found in the directory server 120, information such as the address of another directory server 120 stored in the reference information storage section 125 may be returned to the authentication server 110 as a reference target. The authentication server 110 may then transmit the search request to the other directory server 120.

In that case, the authentication server 110 may be adapted to access a plurality of directory servers operating as the information controllers 130₁ to 130₆, for example through the data communication line 150 shown in Figure 9. When one directory server 120 returns information such as the address of another directory server 120 as a reference target along with the search result indicating the failure of detecting the identification information specified in the search request, the search request may be transmitted to the other directory server 120 based on the information such as the address. This saves system resource in the directory server 120 required for redirecting the search request and reduces the processing load on the directory server 120.

The above second embodiment has been described such that a plurality of directory servers 120 are provided for a plurality of sites corresponding to the zones Z covered by the base stations. However, the present invention is not limited to it. For example, a computer system functioning as the directory server 120 may be provided independently of the sites corresponding to the zones Z covered by the base stations. As a specific example, the directory server 120_{β} may reside at a management center of a mobile communication provider and may be unable to be accessed directly from the authentication server 110 at each site. In that case, the directory server 120_{β} may function as a server that manages the subtree 190_{β}, which is above the subtree 190_{α} managed by the directory server 120_{α} and above the subtree 190_{γ} managed by the directory server 120_{γ}, and may accept redirection of the search request and the search result only from the directory server 120_{α} and the directory server 120_{γ}.

In the above second embodiment, a plurality of directory servers 120 may be provided for one site. Still, the reference information storage section 125 of each directory server 120 stores the information about other directory servers 120 above or below itself in the directory information tree, and each directory server 120 operates as any one of the information controllers 130 as illustrated in Figure 9. Therefore, each directory server 120 can readily determine another directory server 120 as the reference target to which the search request is to be redirected while preventing an increase in system resource.

In the above second embodiment, there may be a case where subtrees potentially containing the entry being searched for can be narrowed down to some extent based on the mobile communication terminal's identification information acquired by the authentication server 110 from the base station controller 100. In that case, a search request with a limited search range may be transmitted to the directory server 120. As a specific example, the authentication server 110 may determine the mobile communication provider that manages the mobile communication terminal's home site from the mobile communication terminal's identification information. The authentication server 110 may then transmit the search request by limiting the search range to only those subtrees that are managed by the directory servers 120 maintained by the mobile communication provider determined.

The authentication servers 110 and the directory servers 120 in the above second embodiment may be implemented not only by specialized apparatus but also by computer systems that function as general server apparatus. For example, a program may be provided that causes a computer system to function as the above-described authentication server 110 or directory server 120, or to perform the above-described processing such as authentication or search. The program may be recorded and stored on a certain recording medium (IC memory, magnetic disk, optical disk, magneto-optical disk, etc.) and installed onto the computer system.

The program may also be distributed by presenting the program on, for example, a bulletin board system (BBS) on a communication network, or by storing the program in a file system of an FTP (File Transfer Protocol) server on a communication network and superimposing the program on a carrier wave over the network.

### Industrial Applicability

According to the present invention, a system that requires less volume of system resource and allows roaming in a simple manner can be constructed in a wireless network.

## Claims

1. A roaming system comprising: one or more controllers provided for each of zones that constitute a wireless network; and a server communicatively connected to the controllers in the zones,
wherein each of the controllers comprises storage means that stores identification information given to wireless terminals for receiving a service, the wireless terminals being registered with the zone in which the controller resides, and each controller operates to detect the identification information on a wireless terminal from the storage means when a request for the service is received from the wireless terminal, and to provide the service to the wireless terminal if the identification information is detected or to issue a query for checking outside for the presence of the identification information if the identification information is not detected; and
the server is adapted to maintain information indicating which controller in which zone stores the identification information on the wireless terminals, and the server operates to, on receiving the query, detect a controller that stores the identification information on the wireless terminal for which the identification information is not detected, to communicate with the detected controller to confirm the presence of the identification information on the wireless terminal which identification information is not detected, and to allow the controller that has issued the query to provide the service to the confirmed wireless terminal.

2. The roaming system according to claim 1,
wherein the server is integrated with one of the controllers.

3. The roaming system according to claim 1 or 2,
wherein the server operates to prohibit provision of the service to the confirmed wireless terminal if the query is received from a controller in a particular zone.

4. A mobile communication system that allows access to a single directory information tree from a plurality of directory servers corresponding to a plurality of sites in a mobile communication network, and comprises a plurality of authentication controllers provided in the respective sites for authenticating mobile communication terminals that request a service at each site, and wherein
each of the plurality of authentication controllers comprises:
search request generation means that acquires identification information on a mobile communication terminal and generates a search request directed to the directory server when a request for a service is received from the mobile communication terminal;
search request transmission means that transmits the search request generated by the search request generation means to the directory server in the corresponding sites; and
authentication processing means that determines whether or not to permit provision of the service to the mobile communication terminal based on a search result acquired from the directory server, and wherein
each of the plurality of servers comprises:
storage means that stores identification information given to mobile communication terminals for receiving a service, the mobile communication terminals being registered with the site corresponding to the directory server;
identification information detection means that detects, from the storage means, the identification information on a mobile communication terminal specified in the search request from the authentication controller or in the search request redirected from a directory server corresponding to another site;
search request redirection means that redirects the search request from the authentication controller to a directory server located above or below in the directory information tree among the directory servers corresponding to other sites when the identification information on the mobile communication terminal is not detected by the identification information detection means; and
search result provision means that provides a search result indicating success in detection of the identification information to the authentication controller when the identification information on the mobile communication terminal is detected in the other directory server to which the search request has been redirected by the search request redirection means, or in the identification information detection means, and
wherein
the authentication processing means operates to determine to permit provision of the service to the mobile communication terminal when the search result indicating success in detection of the identification information on the mobile communication terminal is acquired from the directory server.

5. The mobile communication system according to claim 4, wherein:
each directory server comprises reference information storage means that stores address information on another directory server located above or below in the directory information tree; and
the search request redirection means operates to refer to the address information stored in the reference information storage means and to redirect the search request to the other directory server located above or below in the directory information tree.

6. A mobile communication system that allows access to a single directory information tree having a hierarchical tree structure from a plurality of server apparatus, wherein of the plurality of server apparatuses comprises:
entry management means that stores entries in a directory provided in a subtree in the directory information tree, an attribute value of each entry being identification information given to any one of the mobile communication terminals which are able to provide a service in a mobile communication network;
identification information detection means that detects the identification information on a mobile communication terminal among the attribute values of the entries stored in the directory by the entry management means;
search request transmission means that transmits a predetermined search request to another server apparatus located above or below in the directory information tree when the identification information on the mobile communication terminal is not detected by the identification information detection means; and
service provision control means that allows provision of the service to the mobile communication terminal when the identification information on the mobile communication terminal is detected in the other server apparatus to which the search request has been transmitted by the search request transmission means, or in the identification information detection means, and that prohibits provision of the service to the mobile communication terminal when no other server apparatus is located above or below in the directory information tree or when the identification information on the mobile communication terminal is not detected in the other server apparatus to which the search request has been transmitted by the search request transmission means.

7. The mobile communication system according to claim 6, wherein:
each server apparatus comprises reference information storage means that stores address information on another server apparatus located above or below in the directory information tree; and
the search request transmission means operates to refer to the address information stored in the reference information storage means and to transmit the search request to the other server apparatus located above or below in the directory information tree.

8. A mobile communication control method that allows access to a single directory information tree from a plurality of server apparatus,
wherein each of the plurality of server apparatuses performs a sequence of processing comprising:
an entry management step for storing entries in a directory provided in a subtree in the directory information tree, an attribute value of each entry being identification information given to any one of the mobile communication terminals which are able to provide a service in a mobile communication network;
an identification information detection step for detecting the identification information on a mobile communication terminal among the attribute values of the entries stored in the directory at the entry management step;
a search request transmission step for transmitting a predetermined search request to another server apparatus located above or below in the directory information tree when the identification information on the mobile communication terminal is not detected at the identification information detection step;
a service provision permission step for allowing provision of the service to the mobile communication terminal when the identification information on the mobile communication terminal is detected in the other server apparatus to which the search request has been transmitted at the search request transmission step or detected at the identification information detection step; and
a service provision prohibition step for prohibiting provision of the service to the mobile communication terminal when no other server apparatus is located above or below in the directory information tree at the search request transmission step or when the identification information on the mobile communication terminal is not detected in the other server apparatus to which the search request has been transmitted at the search request transmission step.

9. A computer program for allowing access to a single directory information tree from a plurality of server apparatus, the computer program causing each of the plurality of server apparatuses to perform a sequence of processing comprising:
an entry management step for storing entries in a directory provided in a subtree in the directory information tree, an attribute value of each entry being identification information given to any one of the mobile communication terminals which are able to provide a service in a mobile communication network;
an identification information detection step for detecting the identification information of a mobile communication terminal among the attribute values of the entries stored in the directory at the entry management step;
a search request transmission step for transmitting a predetermined search request to another server apparatus located above or below in the directory information tree when the identification information on the mobile communication terminal is not detected in the identification information detection step;
a service provision permission step for allowing provision of the service to the mobile communication terminal when the identification information on the mobile communication terminal is detected in the other server apparatus to which the search request has been transmitted at the search request transmission step or detected at the identification information detection step; and
a service provision prohibition step for prohibiting provision of the service to the mobile communication terminal when no other server apparatus is located above or below in the directory information tree at the search request transmission step or when the identification information on the mobile communication terminal is not detected at the other server apparatus to which the search request has been transmitted at the search request transmission step.
